# EUROPÄISCHE PATENTANMELDUNG

(11) **EP 4 098 893 A1**
(43) Veröffentlichungstag der Anmeldung: **07.12.2022**
(21) Anmeldenummer: 22186656.9
(22) Anmeldetag: 26.07.2019
(51) Int. Cl.: F16B 23/00, F16B 31/06

(54) **KOMBISCHRAUBE**

(30) Priorität: 31.07.2018 DE 102018118474
(62) Teilanmeldung aus: 19749650.8
(71) Anmelder: F. Reyher NCHFG. GmbH & Co. KG, 22769 Hamburg (DE)
(72) Erfinder: SCHMIDT, Klaus-Dieter, 29591 Römstedt (DE); LAUF, Gary Lee, 22767 Hamburg (DE)
(74) Vertreter: Lenzing Gerber Stute

(57) **Zusammenfassung**

Die Erfindung betrifft eine Schraube mit einem Schraubenkopf (1) und einem Gewinde (3) mit einem Gewindedurchmesser d, wobei der Schraubenkopf eine Höhe k_{S} aufweist, die das Nennmaß der Kopfhöhe k einer normierten Schraube gemäß DIN EN ISO 4014 mit gleichem Gewindedurchmesser oder, sofern in der Norm kein Maß für eine Schraube mit gleichem Gewindedurchmesser angegeben ist, das Nennmaß der Kopfhöhe k einer normierten Schraube mit nächst kleinerem Gewindedurchmesser nicht überschreitet, und wobei der Schraubenkopf (1) einen Innenvielkant oder Innenvielrund sowie einen Außenvielkant oder Außenvielrund zum Aufbringen eines Drehmoments aufweist. Um eine derartige Schraube bereitzustellen, die universeller einsetzbar ist, wird vorgeschlagen, die Schraube so auszugestalten, dass das Flächenverhältnis der angenommenen minimalen tragfähigen Fläche A_{tF} im Schraubenkopf zum Spannungsquerschnitt A_{G} im Gewinde größer gleich 1 ist.

## Beschreibung

Die vorliegende Erfindung betrifft eine Schraube mit einem Schraubenkopf und einem Gewinde mit einem Gewindedurchmesser d, wobei der Schraubenkopf eine Höhe kₛ aufweist, die das Nennmaß der Kopfhöhe k einer normierten Schraube gemäß DIN EN ISO 4014 mit gleichem Gewindedurchmesser oder, sofern in der Norm kein Maß für eine Schraube mit gleichem Gewindedurchmesser angegeben ist, das Nennmaß der Kopfhöhe k einer normierten Schraube mit nächst kleinerem Gewindedurchmesser nicht überschreitet, und wobei der Schraubenkopf einen Innenvielkant oder Innenvielrund sowie einen Außenvielkant oder Außenvielrund zum Aufbringen eines Drehmoments aufweist.

Derartige Schrauben sind als Schrauben mit reduzierter Belastbarkeit, auch Schwachkopfschrauben genannt, bekannt. Sie haben einen niedrigen Schraubenkopf mit einem Innensechskant, Innenvielzahn oder einem Innensechsrund als Innenantrieb und einen Außensechskant als Außenantrieb, so dass sie sowohl mit Hilfe eines entsprechenden Werkzeugs wie beispielsweise einem Maulschlüssel oder mit Hilfe eines Innenvielzahns, Inbus- oder Torx^{®}- Schlüssels verschraubt werden können. Eine Schwachkopfschraube hat allerdings den Nachteil, dass ihr Schraubenkopf durch den Innensechskant, Innenvielzahn oder den Innensechsrund geschwächt ist und bei Überlastung der Schraube nicht im Gewinde, sondern im Bereich des Schraubenkopfes bricht. Deswegen dürfen diese Schrauben nicht mit der gleichen Last beaufschlagt werden, mit der eine vergleichbare Schraube mit Schraubenkopf ausschließlich mit Außensechskant beaufschlagt werden darf. Schrauben mit reduzierter Belastbarkeit sind laut DIN EN ISO 898-1:2013 besonders zu kennzeichnen, indem ihrer Festigkeitsklasse (beispielsweise 8.8, 9.8, 10.9 ...) eine 0 vorangestellt wird (also 08.8, 09.8, 010.9 ...).

In der industriellen Fertigung werden zur Montage von beispielsweise Maschinen oder Fahrzeugen eine Vielzahl verschiedener Schrauben benötigt. Diese Schrauben müssen unterschiedlichste Anforderungen, beispielsweise in Bezug auf ihre Festigkeit, ihre Dimension, Korrosionsbeständigkeit oder eine einfache Handhabbarkeit (insbesondere auch an schwer zugänglichen Stellen) erfüllen. Das kann dazu führen, dass je nach zu montierender Maschine oder Fahrzeug mehrere hundert unterschiedliche Schrauben vorgehalten werden müssen, wobei einige dieser Schrauben nur in äußerst geringen Stückzahlen und andere in hohen Stückzahlen benötigt werden. Hieraus können sich Probleme bei der Montage ergeben, beispielsweise dann, wenn Schrauben gleicher Größe aber unterschiedlicher Festigkeit vertauscht werden und dadurch eine Schraubverbindung, die mit einer falschen Schraube hergestellt wurde, nicht mehr sicher ist. Auch erhöht sich mit der Anzahl unterschiedlicher Schrauben der Aufwand für die Lagerhaltung und die damit verbundenen Kosten, da für jeden benötigten Schraubentyp ausreichend Schrauben vorgehalten werden müssen und insbesondere die Schrauben, die nur in geringen Stückzahlen verwendet werden, häufig deutlich teurer sind als diejenigen, die in großen Stückzahlen zum Einsatz kommen.

Die eingangs genannten Schwachkopfschrauben haben für den Einsatz in der industriellen Fertigung zwar den Vorteil, dass sie sowohl in normal mit Werkzeugen zugänglichen Bereichen (durch den Außenantrieb) als auch in schwer zugänglichen Bereichen (durch den Innenantrieb) verwendbar sind, so dass durch das Vorhalten solcher Schwachkopfschrauben die Anzahl der unterschiedlichen Arten von benötigten Schrauben verringert werden kann. Allerdings sind sie geringer belastbar und können nicht so universell wie herkömmliche Schrauben eingesetzt werden.

Der vorliegenden Erfindung liegt die Aufgabe zugrunde, eine Schraube mit den Merkmalen der eingangs genannten Art bereitzustellen, die universeller einsetzbar ist als die vorbekannten Schwachkopfschrauben.

Diese Aufgabe wird mit einer Schraube mit den Merkmalen des Anspruchs 1 gelöst.

Unter einem Außenvielkant werden hier und im Folgenden die äußeren Flächen des Schraubenkopfs als Angriffsflächen für ein Werkzeug, insbesondere für einen Maulschlüssel verstanden. Typischerweise kann der Außenvielkant vier oder sechs, aber auch eine andere Anzahl von aneinander angrenzenden äußeren Werkzeugangriffsflächen, die zusammen im Wesentlichen ein Vieleck bilden, aufweisen. Auch ein Außenvielzahn fällt unter diese Definition. Entsprechend wird unter einem Außenvielrund ein etwa sternförmiges Außenprofil mit abgerundeten Ecken verstanden. Typischerweise hat ein solches Profil etwa die Außenkontur eines Davidsterns mit sechs abgerundeten Zacken (beispielsweise ein Torx^{®} - Außensechsrund).

Unter einem Innenvielkant wird eine Ausnehmung im Schraubenkopf mit einer Mehrzahl von aneinander angrenzenden Werkzeugangriffsflächen verstanden, in die ein Werkzeug eingesetzt werden kann, um ein Drehmoment auf die Schraube aufzubringen. Bei einem Innenvielkant verlaufen die durch die aneinander angrenzenden Werkzeugangriffsflächen gebildeten Kanten im Wesentlichen parallel zur Längsachse der Schraube. Typischerweise ist die Ausnehmung als Innenvierkant oder Innensechskant ausgebildet, aber auch hier kann eine andere Anzahl von Angriffsflächen vorgesehen sein. Ein Innenvielzahn ist auch hierunter zu verstehen, Schlitz- und Kreuzschlitzausnehmungen fallen nicht unter den Begriff des Innenvielkants. Entsprechendes gilt für einen Innenvielrund, der eine sternartige Ausnehmung mit abgerundeten Ecken ist und typischerweise sechs Ausbuchtungen hat (beispielsweise ein Torx^{®} - Innensechsrund).

Die Höhe kₛ des erfindungsgemäßen Schraubenkopfes ist begrenzt und nicht höher als das normierte Nennmaß der Kopfhöhe k eines Schraubenkopfes einer Sechskantschraube mit Schaft gemäß DIN EN ISO 4014:2011. Entsprechende normierte Nennmaße der Kopfhöhe k sind auch in der DIN EN ISO 4017:2015-05 für Sechskantschrauben mit Gewinde bis Kopf zu finden. Maßgeblich im Sinne der Erfindung sind aber die in der DIN EN ISO 4014:2011 genannten Nennmaße der Kopfhöhe k, sowohl für die maximale kₛ einer erfindungsgemäßen Schraube mit gewindelosem Schaft als auch für Schrauben mit Gewinde bis zum Schraubenkopf. Sollte der Außendurchmesser des Gewindes keine Entsprechung in der Norm finden, ist die maximale Kopfhöhe der erfindungsgemäßen Schraube kleiner oder gleich dem Nennmaß der Kopfhöhe k für eine normierte Schraube mit einem nächst kleineren Außendurchmesser. Beträgt der äußere Gewindedurchmesser beispielsweise 25,5 mm, für die es in der Norm keine Maßangabe gibt, ist zur Bestimmung der maximalen Kopfhöhe das Nennmaß für die normierte Schraube mit dem nächst kleineren Gewindedurchmesser, also M24 heranzuziehen. Das Nennmaß für die Kopfhöhe k einer M24 - Schraube beträgt 15 mm, die Höhe kₛ des Schraubenkopfes der erfindungsgemäßen Schraube darf dann nicht höher als 15 mm sein.

Die erfindungsgemäße Schraube ist dadurch gekennzeichnet, dass das Flächenverhältnis einer angenommenen minimalen tragfähigen Fläche im Schraubenkopf zur Spannungsquerschnittsfläche im Gewinde größer gleich 1 ist.

Unter einer angenommenen minimalen tragfähigen Fläche wird hier und im Folgenden die Mantelfläche eines Kegelstumpfs verstanden, die durch eine Strecke s verläuft, die durch den kürzesten Abstand innerhalb des Schraubenmaterials zwischen der Ausnehmung im Schraubenkopf und der Außenfläche der Schraube am Übergang von Schraubenkopf zu Schraubenschaft bzw. Gewinde definiert ist, wobei die Mittelachse des Kegelstumpfs der Längsachse der Schraube entspricht. Die Mantelfläche A_{tF} berechnet sich aus A_{tF}=(D_{M}+d_{M})/2^{∗}π^{∗}s, wobei d_{M} und D_{M} der kleinste und der größte Durchmesser des Kegelstumpfes sind.

Unter dem Spannungsquerschnitt des Gewindes wird der Durchmesser derjenigen Kreisfläche verstanden, die bei dem Gewinde der Schraube als Ersatz für die tatsächliche Schnittfläche als maßgebend für die Berechnung von mechanischen Spannungen angenommen wird. Er errechnet sich für Regelgewinde (metrisches ISO-Gewinde nach DIN 13) mit Hilfe der Formel Aₛ=((dₖ + d_{fl})/4)^{2 ∗} π, wobei dₖ der Kerndurchmesser und d_{fl} der Flankendurchmesser des Gewindes ist. Soweit es sich nicht um ein Regelgewinde handelt, gelten für die Bestimmung des Spannungsquerschnitts die Angaben in der Normenreihe DIN 13 ff.

Es konnte überraschend gezeigt werden, dass es möglich ist, die minimale tragfähige Fläche im Bereich des Übergangs von Schraubenkopf zu Schaft bzw. Gewinde der Schraube so zu vergrößern, dass die Schraube bei Überlastung nicht mehr im Kopf, sondern im freien belasteten Gewinde bricht. Die Vergrößerung der minimalen tragfähigen Fläche gegenüber herkömmlichen Schwachkopfschrauben wird dadurch erreicht, dass der Innenvielkant bzw. das Innenvielrund anders als bei vorbekannten Schrauben nicht so weit in den Schraubenkopf eingepresst wird und/oder ein Innenvielkant oder Innenvielrund mit einem kleineren Maß als üblich in den Schraubenkopf eingepresst wird.

Die erfindungsgemäßen Schrauben, die wahlweise mit oder ohne gewindefreiem Schaft ausgebildet sein können, sind daher nicht mehr als Schrauben geringer Belastbarkeit zu kennzeichnen, und ihr Einsatzbereich wird dadurch deutlich erweitert. Dadurch ist es möglich, die Anzahl der verschiedenen Schraubentypen, die in der industriellen Fertigung benötigt werden, zu reduzieren. Dies hat eine einfachere Lagerhaltung, geringere Kosten und eine Vereinfachung in der Produktion zur Folge.

Es hat sich als vorteilhaft erwiesen, wenn das Flächenverhältnis größer gleich 1,2 oder besser noch größer gleich 1,25 ist, wenn der Gewindedurchmesser d, also sein Außendurchmesser, <= 5 mm ist. Wenn der Gewindedurchmesser d > 5 mm ist, kann ein bevorzugtes Flächenverhältnis größer gleich 1,3, vorzugsweise größer gleich 1,35 angestrebt werden. Für Gewindedurchmesser d ab 12 mm ist das Flächenverhältnis vorzugsweise größer gleich 1,4 oder 1,45.

Bevorzugt weisen die erfindungsgemäßen Schrauben als Innenvielkant bzw. Innenvielrund einen Innensechskant, Innenvielzahn oder ein Innensechsrund auf. Die erfindungsgemäßen Schrauben werden bevorzugt aus einem Werkstoff für Schrauben der Schraubenfestigkeitsklasse 8.8 gefertigt, da er für die Schraubenfertigung eine ausreichende Fließfähigkeit und gleichzeitig gute Festigkeitseigenschaften hat. Je nach Anforderungsprofil für die erfindungsgemäßen Schrauben können auch Werkstoffe für eine geringere oder höhere Schraubenfestigkeitsklasse in Frage kommen.

Um die Funktionalität der erfindungsgemäßen Schrauben weiter zu erhöhen, können sie mit einer unverlierbaren Unterlegscheibe ausgestattet sein. Eine solche Unterlegscheibe kann in verschiedenen Größen ausgeführt sein, insbesondere auch in solchen Größen, die zur Verwendung der Schraube an Langlöchern geeignet sind. Um eine sichere Montage zu gewährleisten, ist es von Vorteil, wenn die derart ausgestatteten Schrauben über eine Beschichtung verfügen, die ein definiertes Reibwertfenster aufweist, insbesondere einen Gesamtreibwert µ_{tοt} in einem Bereich von 0.09 bis 0.14 oder 0.12 bis 0.18 nach DIN EN ISO 16047:2013-01.

Alternativ oder in Ergänzung zu einer unverlierbaren Unterlegscheibe kann die erfindungsgemäße Schraube mit einem Schraubenkopf versehen sein, der gekennzeichnet ist durch einen Flanschabschnitt an seiner Unterseite, so dass sich eine größere Anpressfläche des Schraubenkopfes ergibt.

Zur Vereinfachung des Einsetzens in eine Gewindebohrung können die erfindungsgemäßen Schrauben am freien Ende des Gewindes mit einer Ansatzspitze versehen sein.

Es hat sich im Übrigen herausgestellt, dass es bei der Herstellung der erfindungsgemäßen Schrauben von Vorteil ist, wenn der Schraubenkopf mit einem polierten Werkzeug gepresst wird. Dadurch erhält der Schraubenkopf nicht nur eine optisch ansprechende, glatte Oberfläche, sondern es wird auch erreicht, dass der Materialfluss an der Grenzfläche zwischen Werkzeug und Schraubenmaterial optimiert ist, was zu geringeren Spannungen im Schraubenkopf und damit zu einer erhöhten Festigkeit führt.

Im Folgenden wird die Erfindung anhand von Figuren, in denen ein bevorzugtes Ausführungsbeispiel der Erfindung dargestellt ist, näher erläutert.

Es zeigen
- Fig. 1: eine seitliche Ansicht einer erfindungsgemäßen Schraube;
- Fig. 2: einen Schnitt der erfindungsgemäßen Schraube entlang der Schnittlinie A-A in
- Fig. 3: die angenommene minimale tragfähige Fläche der in den Figuren 1 und 2 dargestellten Schraube als Mantelfläche eines Kegelstumpfs; und
- Fig. 4: eine Aufsicht auf den Schraubenkopf der in den Figuren 1 und 2 gezeigten Schraube.

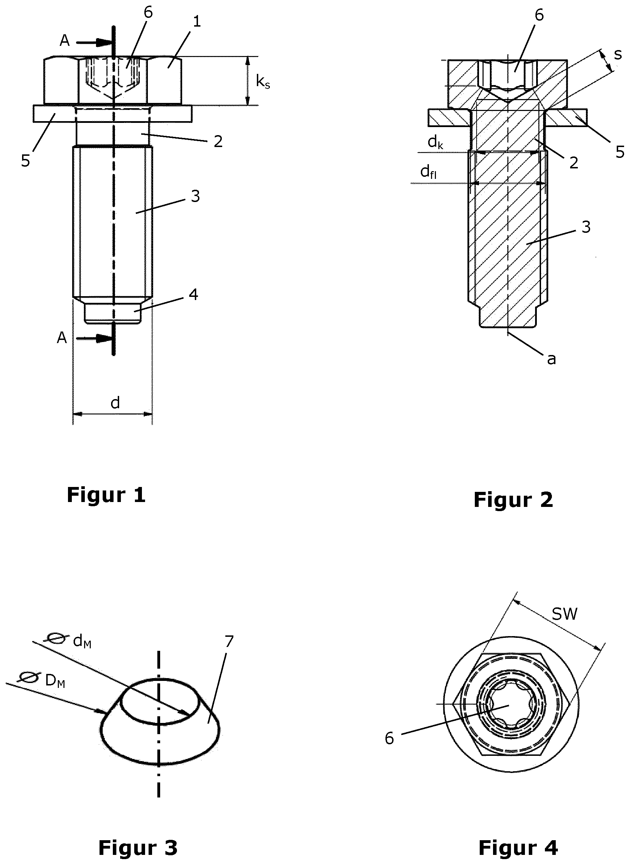

Die den Figuren 1 bis 4 dargestellte Schraube weist einen Schraubenkopf 1 in Form eines Außensechskants mit einer Kopfhöhe kₛ, einen sich an den Schraubenkopf 1 anschließenden gewindefreien Schaftabschnitt 2 und einen sich daran anschließenden Gewinde 3 mit einem Außendurchmesser d auf. Am in den Figuren 1 und 2 unteren Ende des Gewindes ist eine Ansatzspitze 4 vorgesehen. Im Bereich des gewindefreien Schaftabschnitts 2 sitzt eine unverlierbare Unterlegscheibe 5.

Der Schraubenkopf 1 weist einen Innensechsrund 6 auf. Durch den in den Schraubenkopf eingelassenen Innensechsrund 6 wird das tragfähige Material im Schraubenkopf 1 deutlich verringert. Zur Berechnung einer angenommenen minimalen tragfähigen Fläche im Schraubenkopf 1 wird die kürzeste Strecke s des Schraubenmaterials zwischen der Ausnehmung für den Innensechsrund 6 und der Außenfläche der Schraube im Übergang zwischen Schraubenkopf 1 und Schaftabschnitt 2 bestimmt. Diese Strecke s ist Bestandteil einer Mantelfläche eines Kegelstumpfs 7 (s. Fig. 3), die sich konzentrisch um die Längsachse a der Schraube herum erstreckt. Diese Mantelfläche ist die angenommene minimale tragfähige Fläche im Schraubenkopf 1. Die Fläche berechnet sich aus A_{fF}=(D_{M}+d_{M})/2^{∗}π^{∗}s, wobei d_{M} der in Figur 3 dargestellte kleinste Durchmesser des Kegelstumpfes und D_{M} der größte Durchmesser ist.

Der Spannungsquerschnitt im Gewinde 3 für das hier dargestellte Regelgewinde berechnet sich aus Aₛ=((dₖ + d_{fl})/4)^{2 ∗} π.

Um eine solche Kombinationsschraube vollständig belastbar zu gestalten, muss das Verhältnis der Flächen A_{tF}/A_{G} >= 1 sein und ist vorzugsweise für alle Schraubengrößen >=1,2 oder 1,25.

## Patentansprüche

1. Schraube, insbesondere Kombischraube, mit einem Schraubenkopf (1) und einem Gewinde (3) mit einem Gewindedurchmesser d, wobei der Schraubenkopf eine Höhe kₛ aufweist, die das Nennmaß der Kopfhöhe k einer normierten Schraube gemäß DIN EN ISO 4014 mit gleichem Gewindedurchmesser oder, sofern in der Norm kein Maß für eine Schraube mit gleichem Gewindedurchmesser angegeben ist, das Nennmaß der Kopfhöhe k einer normierten Schraube mit nächst kleinerem Gewindedurchmesser nicht überschreitet, und wobei der Schraubenkopf (1) einen Innenvielkant oder Innenvielrund sowie einen Außenvielkant oder Außenvielrund zum Aufbringen eines Drehmoments aufweist, **dadurch gekennzeichnet, dass** das Flächenverhältnis der angenommenen minimalen tragfähigen Fläche A_{tF} im Schraubenkopf zum Spannungsquerschnitt A_{S} im Gewinde größer gleich 1 ist.

2. Schraube nach Anspruch 1, **dadurch gekennzeichnet, dass** das Gewinde (3) einen Außendurchmesser <= 5 mm hat und das Flächenverhältnis größer gleich 1,2, vorzugsweise größer gleich 1,25 ist.

3. Schraube nach Anspruch 1 oder 2, **dadurch gekennzeichnet, dass** das Gewinde (3) einen Außendurchmesser > 5 mm hat und das Flächenverhältnis größer gleich 1,3, vorzugsweise größer gleich 1,35 ist.

4. Schraube nach einem der vorstehenden Ansprüche, **dadurch gekennzeichnet, dass** das Gewinde (3) einen Außendurchmesser >= 12 mm hat und das Flächenverhältnis größer gleich 1,4 oder 1,45 ist.

5. Schraube nach einem der vorstehenden Ansprüche, **dadurch gekennzeichnet, dass** die inneren Angriffsflächen ein Innensechskant, Innenvielzahn oder ein Innensechsrund (6) sind.

6. Schraube nach einem der vorstehenden Ansprüche, **dadurch gekennzeichnet, dass** sie aus einem Werkstoff der Schraubenfestigkeitsklasse 8.8 gemäß DIN EN ISO 898-1:2013 gefertigt ist.

7. Schraube nach einem der vorstehenden Ansprüche, **gekennzeichnet durch** eine unverlierbare Unterlegscheibe (5).

8. Schraube nach einem der vorstehenden Ansprüche, **gekennzeichnet durch** einen Flanschabschnitt an der Unterseite des Schraubenkopfes (1).

9. Schraube nach einem der vorstehenden Ansprüche, **gekennzeichnet durch** eine Ansatzspitze (4) am freien Ende des Gewindes (3).

10. Schraube nach einem der vorstehenden Ansprüche, **dadurch gekennzeichnet, dass** das Gewinde (3) ein metrisches ISO-Gewinde ist.

11. Verfahren zum Herstellen einer Schraube nach einem der vorstehenden Ansprüche, **dadurch gekennzeichnet, dass** der Schraubenkopf (1) mit einem polierten Werkzeug gepresst wird.
